# EUROPEAN PATENT APPLICATION

(11) **EP 4 787 361 A1**
(43) Date of publication of application: **05.08.2026**
(21) Application number: 24871822.3
(22) Date of filing: 10.09.2024
(51) Int. Cl.: G09G 3/36, F21V 23/00, G02F 1/133, G09G 3/20, G09G 3/34, H05B 45/14, H05B 45/325

(54) **DISPLAY CONTROL DEVICE AND METHOD, AND PROGRAM**

(30) Priority: 26.09.2023 JP 2023162849
(71) Applicant: Sony Group Corporation, Tokyo 108-0075 (JP)
(72) Inventor: MATSUSHITA Kota, Tokyo 108-0075 (JP); ZEN Masao, Tokyo 108-0075 (JP); AKIYAMA Hideki, Tokyo 108-0075 (JP); SHIBANUMA Tetsuo, Tokyo 108-0075 (JP); NAGAYAMA Sei, Tokyo 108-0075 (JP); HARAGUCHI Masashi, Tokyo 108-0075 (JP)
(74) Representative: 2SPL Patentanwälte PartG mbB
(86) International application number: PCT/JP2024/032296
(87) International publication number: WO 2025/070025

(57) **Abstract**

The present technology relates to a display control device, a display control method, and a program that can reduce video blur even in a state where the input frequency changes. In blinking control, the display control device sets a normal lighting control period of a backlight to be equal to or less than a frame period obtained at a maximum frequency of a video signal and compensates for a brightness decrease amount in an additional lighting control period of the backlight, which is caused by a frequency change of the video signal, during at least one of the additional lighting control period or the normal lighting period of the next frame. The present technology can be applied to a display device that performs blinking control.

## Description

### Technical Field

The present technology relates to a display control device, a display control method, and a program, and particularly relates to a display control device, a display control method, and a program that can reduce video blur even in a state where the input frequency changes.

### Background Art

Video blur can be reduced by blinking control of a backlight.

For example, PTL 1 proposes a technology of controlling the frequency of blinking in accordance with an amount of motion in a video.

### Citation List

### Patent Literature

PTL 1: JP 2016-123122 A

### Summary

### Technical Problem

However, in the blinking control of the backlight, a light-on period and a light-off period of the backlight are determined on the premise of the condition that the input frequency (frame frequency at the time of input) of a video signal is constant. The same applies to the technology disclosed in PTL 1.

Therefore, in a state where the input frequency of the video signal changes, it is difficult to cope with the blinking control of the backlight.

The present technology has been made in view of such circumstances, and an object thereof is to make it possible to reduce video blur even in a state where the input frequency of the video signal changes.

### Solution to Problem

A display control device according to an aspect of the present technology includes a backlight control unit configured to, in blinking control, set a normal lighting control period of a backlight to be equal to or less than a frame period obtained at a maximum frequency of a video signal and compensate for a brightness decrease amount in an additional lighting control period of the backlight, which is caused by a frequency change of the video signal, during at least one of the additional lighting control period or the normal lighting period of a next frame.

In an aspect of the present technology, in blinking control, a normal lighting control period of a backlight is set to be equal to or less than a frame period obtained at a maximum frequency of a video signal, and a brightness decrease amount in an additional lighting control period of the backlight, which is caused by a frequency change of the video signal, is compensated for during at least one of the additional lighting control period and the normal lighting period of a next frame.

### Brief Description of Drawings

[Fig. 1]

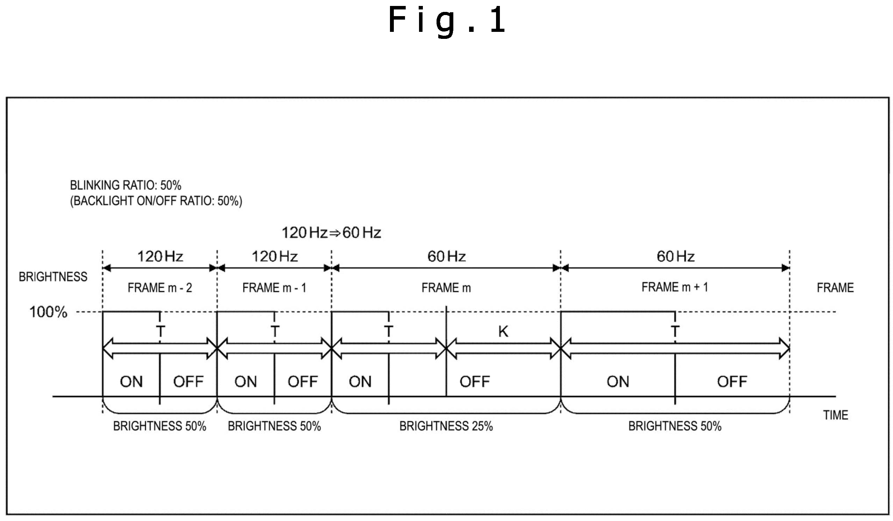

   Fig. 1 is a diagram illustrating an example of a blinking operation of the related art.
[Fig. 2]

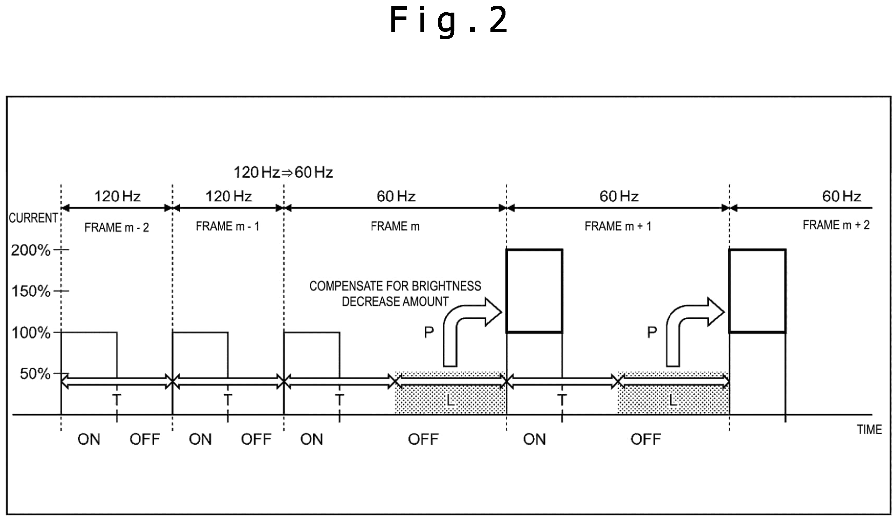

   Fig. 2 is a diagram illustrating an example of a blinking operation according to the present technology.
[Fig. 3]

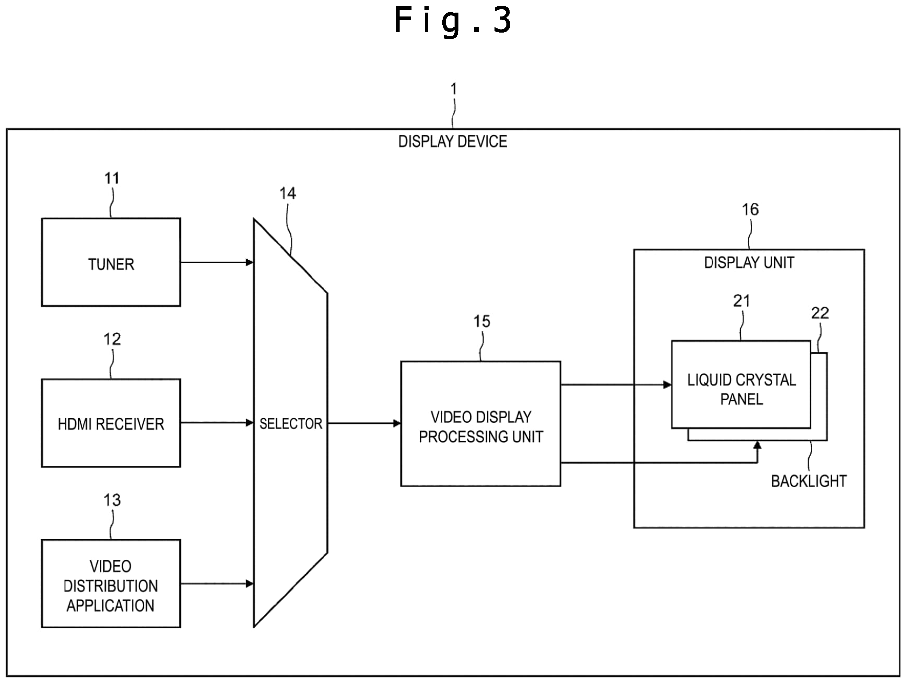

   Fig. 3 is a block diagram illustrating a configuration example of a display device according to an embodiment of the present technology.
[Fig. 4]

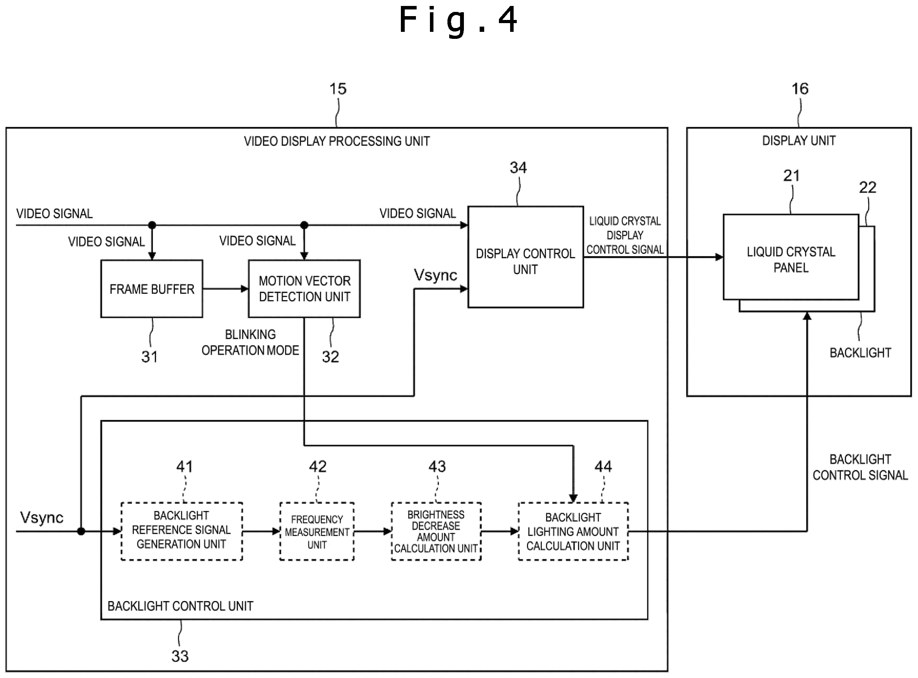

   Fig. 4 is a block diagram illustrating a configuration example of a video display processing unit in Fig. 3 together with a display unit.
[Fig. 5]

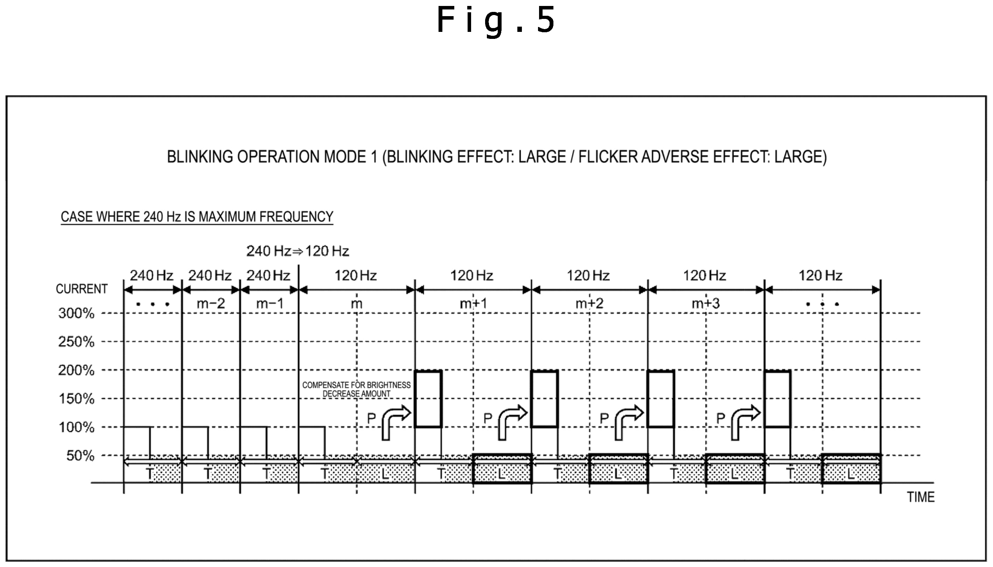

   Fig. 5 is a diagram illustrating an operation example of a blinking operation mode 1.
[Fig. 6]

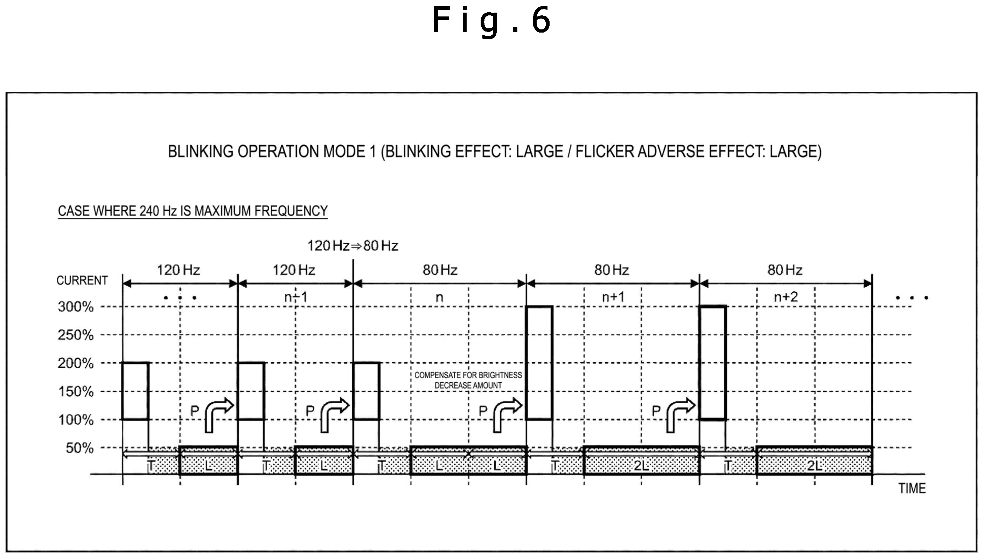

   Fig. 6 is a diagram illustrating an operation example of the blinking operation mode 1 continuing from the operation example in Fig. 5.
[Fig. 7]

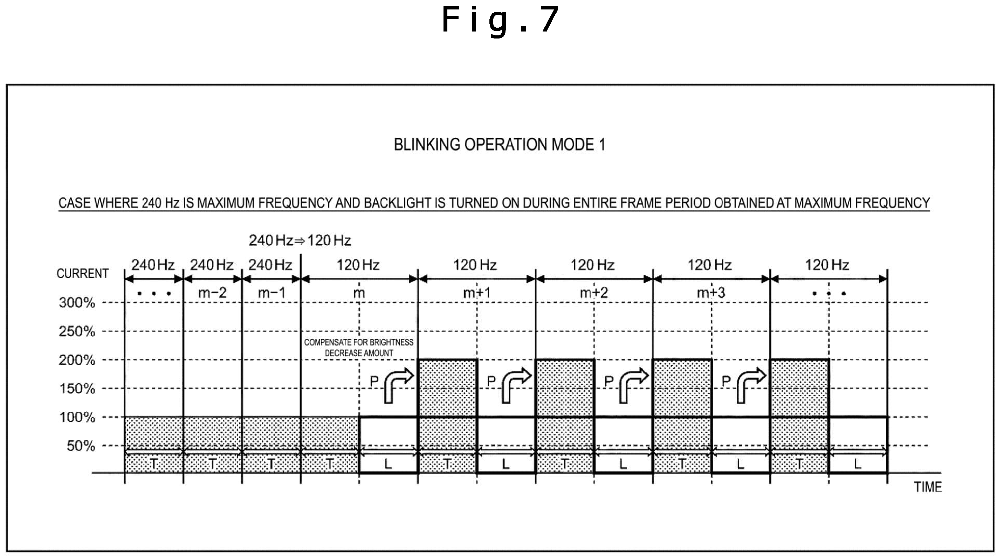

   Fig. 7 is a diagram illustrating another operation example of the blinking operation mode 1 in Fig. 5.
[Fig. 8]

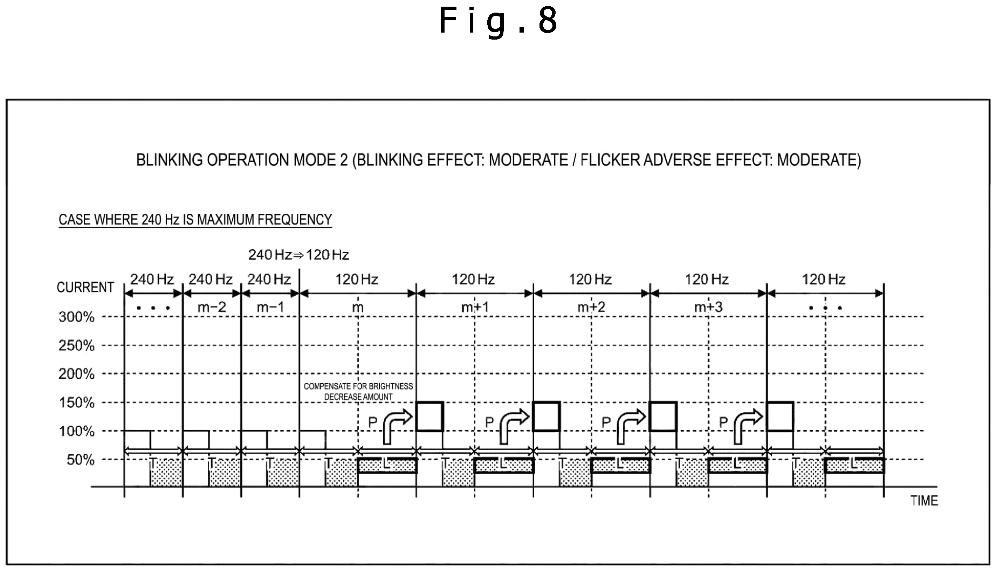

   Fig. 8 is a diagram illustrating an operation example of a blinking operation mode 2.
[Fig. 9]

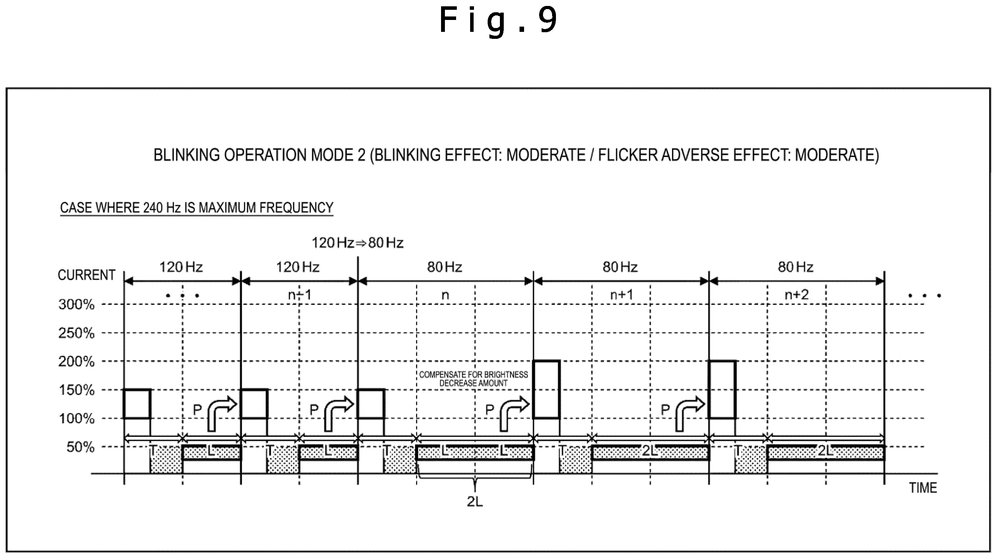

   Fig. 9 is a diagram illustrating an operation example of the blinking operation mode 2 continuing from the operation example in Fig. 8.
[Fig. 10]

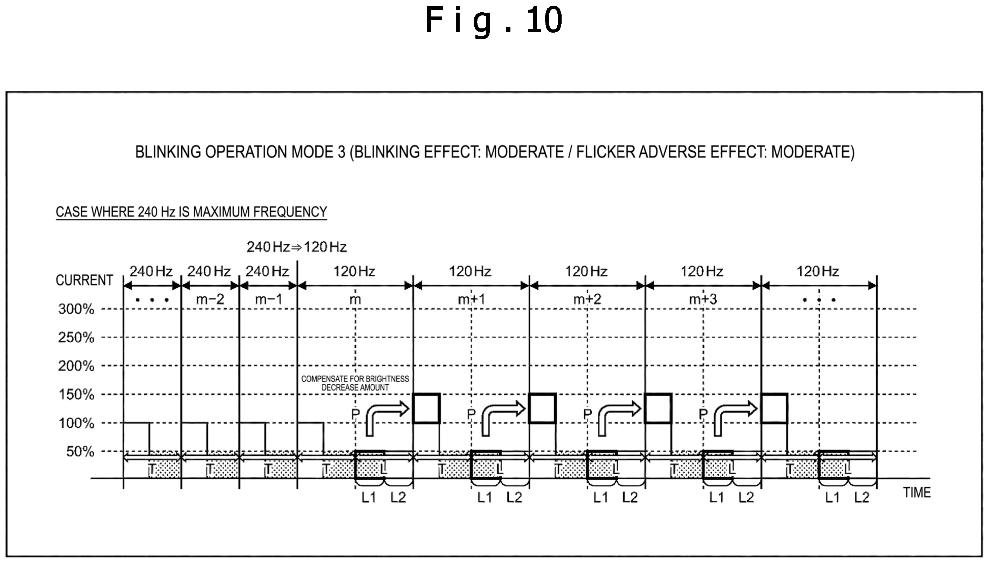

   Fig. 10 is a diagram illustrating an operation example of a blinking operation mode 3.
[Fig. 11]

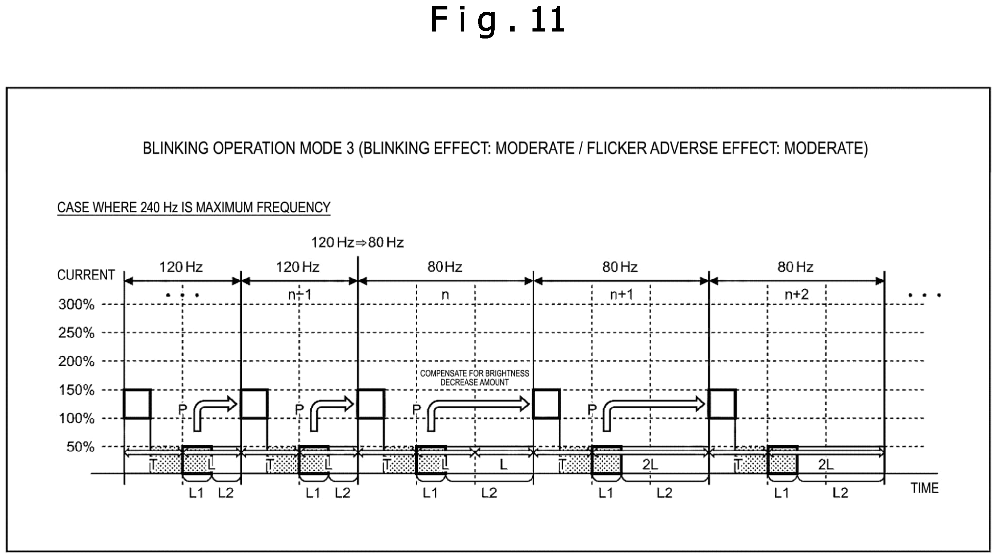

   Fig. 11 illustrates an operation example of the blinking operation mode 3 continuing from the operation example in Fig. 10.
[Fig. 12]

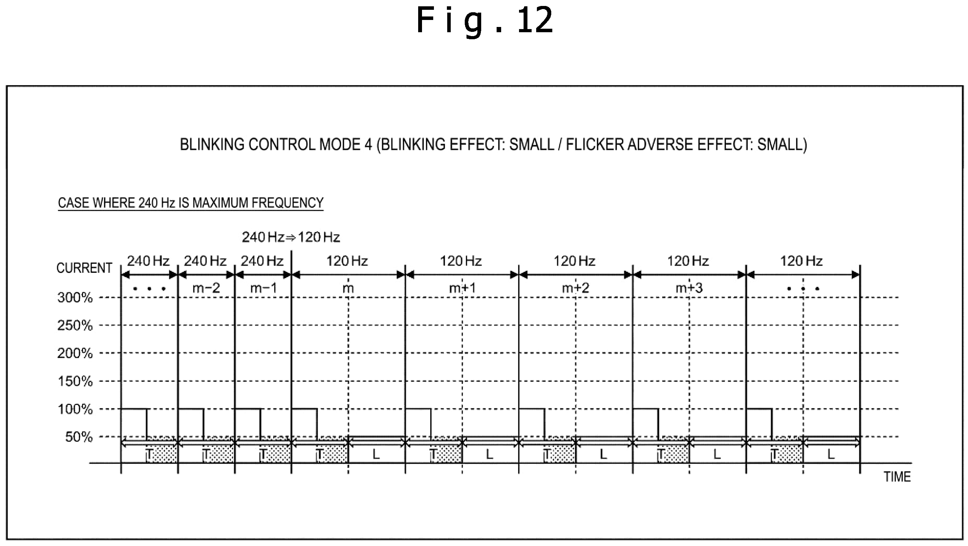

   Fig. 12 is a diagram illustrating an operation example of a blinking operation mode 4.
[Fig. 13]

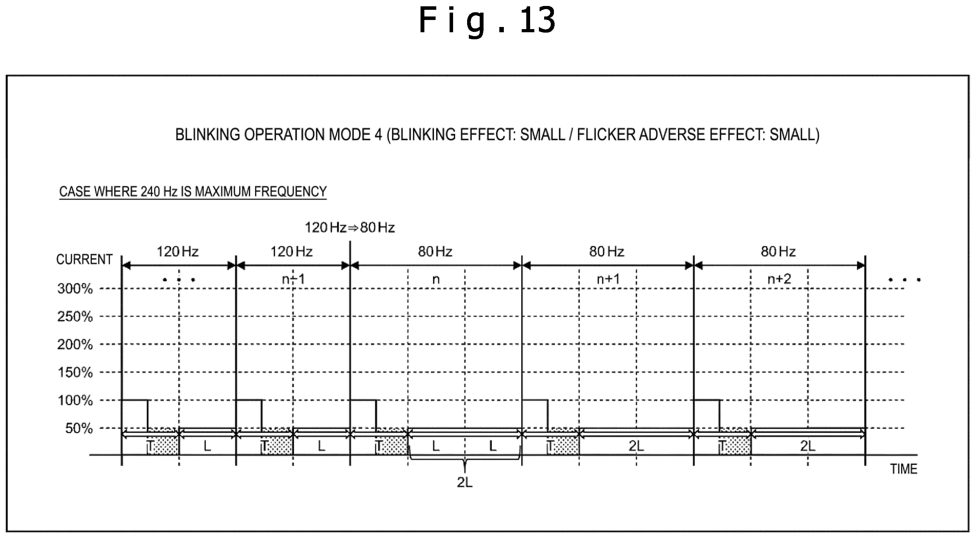

   Fig. 13 is a diagram illustrating an operation example of the blinking operation mode 4 continuing from the operation example in Fig. 12.
[Fig. 14]

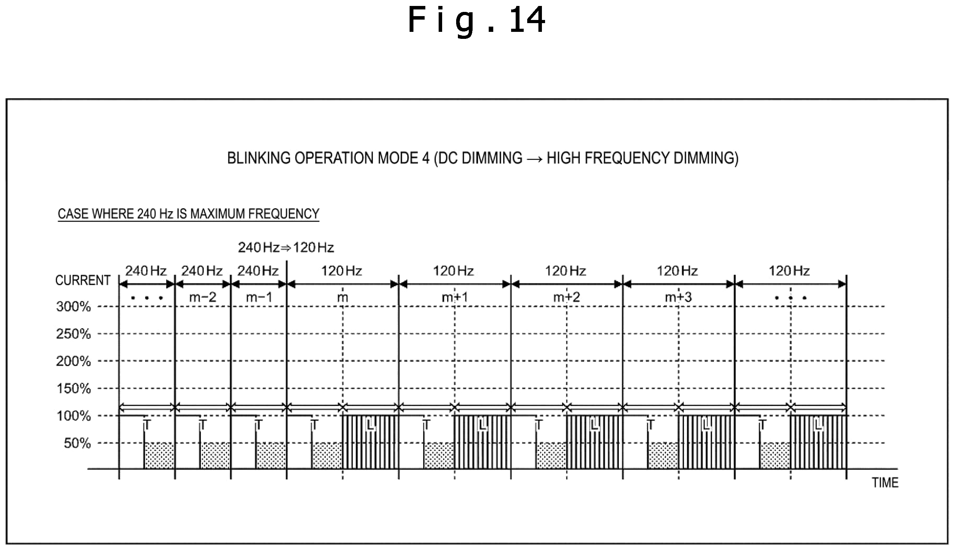

   Fig. 14 is a diagram illustrating another operation example of the blinking operation mode 4 in Fig. 12.
[Fig. 15]

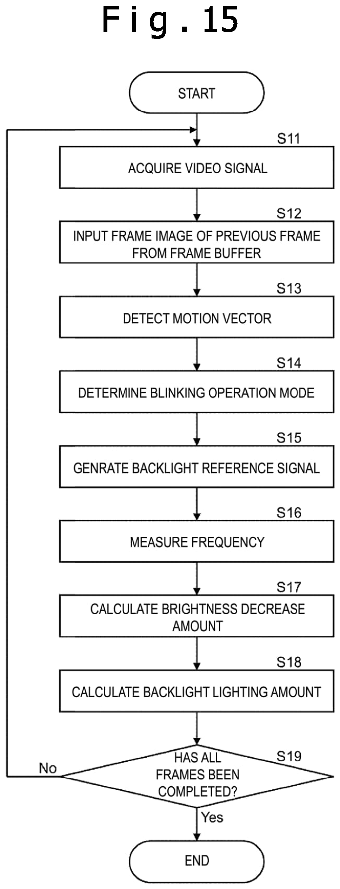

   Fig. 15 is a flowchart for describing backlight control processing of the video display processing unit in Fig. 4.
[Fig. 16]

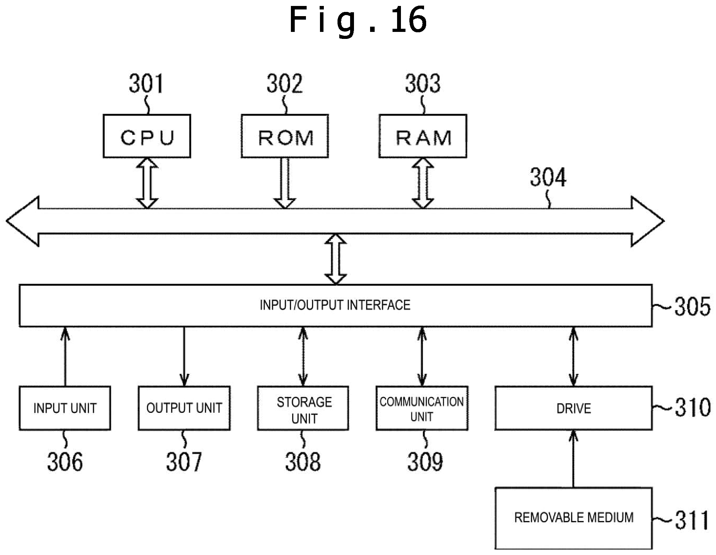

   Fig. 16 is a block diagram illustrating a configuration example of a computer.

### Description of Embodiments

Hereinafter, embodiments for implementing the present technology will be described. The description will be made in the following order.
1. Overview of Present Technology
2. Configuration
3. Details of Blinking Operation Modes
4. Operation
5. Others

### 1. Overview of Present Technology

### Operation Example of Blinking Operation of Related Art in Contrast to Present Technology

Fig. 1 is a diagram illustrating an example of a blinking operation of the related art.

Fig. 1 illustrates a normal lighting control period T when the input frequency (frame frequency at the time of input) of a video signal changes from 120 Hz to 60 Hz in the frame m in the case where the blinking ratio is 50%, a light-off period K caused by the change in the frequency, and a state of brightness.

In the related art, the normal lighting control period T of the backlight is equal to the frame period of the input frequency, and is a period in which the backlight is controlled to be turned on and off in accordance with a blinking ratio. The light-off period K of the backlight is a period in which the backlight is turned off.

The term "blinking ratio" represents a ratio of a period in which the backlight is turned on (hereinafter referred to as a backlight ON period) to a period in which the backlight is turned off (hereinafter referred to as a backlight OFF period) in the normal lighting control period T. In the case of Fig. 1, the blinking ratio is 50%. That is, blinking control is performed so that the backlight is turned on in a half period of the normal lighting control period T and the backlight is turned off in a half period of the normal lighting control period T. Note that when the blinking ratio is 100%, the blinking control is performed so that the backlight is turned on in the entire period of the normal lighting control period T.

In Fig. 1, the horizontal axis represents time, and the vertical axis represents brightness at each timing. The brightness is 100% in the backlight ON period (substantial light-on period) of the normal lighting control period T, and the brightness is 0% in the backlight OFF period of the normal lighting control period T and the light-off period K. Further, the brightness and the ON/OFF state of the backlight for each frame are illustrated in the lower part of the drawing.

In Fig. 1, since the input frequency is 120 Hz and the blinking ratio is 50% until the frame m - 1, the blinking control is performed so that a half period of the normal lighting control period T (1/120 seconds) becomes the backlight ON period of the normal lighting control period and a half period of the normal lighting control period T becomes the backlight OFF period of the normal lighting control period.

However, in the frame m, the blinking control is performed on the premise that the input frequency is 120 Hz, but the input frequency changes to 60 Hz in the middle of the frame m, and therefore, in addition to the normal lighting control period T, the light-off period K (1/60 - 1/120 seconds) is generated in which the backlight is turned off.

As a result, since the blinking ratio is 50%, the brightness in one frame is also 50% up to the frame m - 1 and after the frame m + 1. However, in the frame m, the brightness in one frame becomes 25% due to the generated light-off period K.

Note that, when the input frequency of the video signal changes from 60 Hz to 120 Hz in the frame m in the case where the blinking ratio is 50%, the backlight OFF period of the normal lighting control period T is eliminated.

As described above, in a state where the input frequency of the video signal changes as represented by, for example, a variable refresh rate (VRR) mode, when the blinking control of the backlight is performed, the backlight OFF period of the normal lighting control period T becomes short, or conversely, the light-off period K becomes long, and thus the substantial backlight OFF period does not become constant.

As a result, the ratio of the period in which the backlight is turned on to the period in which the backlight is turned off in each frame is not maintained, the brightness changes between frames, and the brightness change between frames is perceived by a user as blinking (flicker) of the backlight.

### Present Technology

Fig. 2 is a diagram illustrating an example of a blinking operation according to the present technology.

Fig. 2 illustrates the normal lighting control period T, an additional lighting control period L, and a current ratio in a light-on period of the backlight, when the input frequency changes from 120 Hz to 60 Hz in the frame m in the case where the blinking ratio is 50%. The current ratio in the light-on period of the backlight indicates a ratio of the current with reference to the current in the backlight ON period when the input frequency is 120 Hz (as 100%).

In Fig. 2, the horizontal axis represents time, and the vertical axis represents the current ratio to the backlight. Further, ON and OFF states of the backlight are indicated in the lower part of the drawing.

In the present technology, the normal lighting control period T is set to be equal to or less than the frame period obtained at the maximum frequency of the video signal, so that the next frame is not shifted in the middle of the normal lighting control period T of the backlight as in the related art, even when the input frequency changes. In the case of Fig. 2, since the maximum frequency of the video signal is 120 Hz, the normal lighting control period T is set to 1/120 seconds, which is the frame period when the input frequency of the video signal is 120 Hz.

Since the blinking ratio is 50%, the blinking control is performed so that a half period of the normal lighting control period T becomes the backlight ON period and a half period of the normal lighting control period T becomes the backlight OFF period.

Further, in the present technology, a period generated by the frequency change is referred to as the additional lighting control period L. In Fig. 2, the additional lighting control period L is a period in which the backlight is turned off. However, the additional lighting control period L is a period in which the backlight is controlled to be turned on and off in accordance with an operation mode described later.

Up to the frame m - 1, since the input frequency is 120 Hz, the additional lighting control period L does not occur. Further, when the input frequency is 120 Hz, the current ratio to the backlight is 100% in the backlight ON period of the normal lighting control period T, and the current ratio to the backlight is 0% in the backlight OFF period of the normal lighting control period T.

In the frame m, the blinking control is performed in the same manner as in the frame m - 1, but the input frequency changes to 60 Hz in the middle of the frame m, and therefore, the additional lighting control period L (1/120 seconds) is generated in addition to the normal lighting control period T (1/120 seconds). In the additional lighting control period L in Fig. 2, the backlight is controlled to be turned off as in the related art, and therefore the current ratio to the backlight becomes 0%.

Then, in the present technology, as indicated by an arrow P, a brightness decrease amount of the backlight due to the additional lighting control period L is compensated for in the light-on period of the backlight in the next frame m + 1. That is, in the backlight ON period of the normal lighting control period T of the frame m + 1, the current ratio to the backlight is set to 200%, thereby compensating for the brightness decrease amount of the backlight due to the additional lighting control period L in the frame m, which is caused by the frequency change in the input frequency to 60 Hz.

Further, in the frame m + 1 also, since the input frequency is 60 Hz, the additional lighting control period L is generated in addition to the normal lighting control period T, as in the frame m. The brightness decrease amount in the additional lighting control period L of the frame m + 1 is compensated for by setting the current ratio to the backlight to 200% in the backlight ON period of the normal lighting control period T of the frame m + 2, as indicated by the arrow P. In the subsequent frames, the same operation is performed until the input frequency changes.

As described above, in the blinking control of the present technology, the normal lighting control period is set to be equal to or less than the frame period obtained at the maximum frequency of the video signal.

As a result, even when the input frequency changes, the transition to the next frame in the middle of the normal lighting control period of the backlight is suppressed.

Further, although the additional lighting control period is not uniform due to the change in the input frequency, in the blinking control of the present technology, the brightness decrease amount in the additional lighting control period is compensated for, for example, during the light-on period of the next frame. Further, as described later, the brightness decrease amount in the additional lighting control period may be compensated for, for example, during the additional lighting control period.

As described above, it is possible to realize blinking control that can improve video blur even in a situation where the input frequency changes.

### 2. Configuration

### Device Configuration

Fig. 3 is a block diagram illustrating a configuration example of a display device according to an embodiment of the present technology.

A display device 1 in Fig. 3 includes a tuner 11, an HDMI (registered trademark) receiver 12, a video distribution application 13, a selector 14, a video display processing unit 15, and a display unit 16.

The tuner 11 acquires a desired video signal (stream) from a broadcast wave received by an antenna (not illustrated) and outputs the video signal to the selector 14.

The HDMI receiver 12 is an interface that receives a video signal supplied from an external device (not illustrated) such as a personal computer or a game device. The HDMI receiver 12 outputs the received video signal to the selector 14.

The video distribution application 13 receives a desired video signal from a video distribution server (not illustrated) via a network, and outputs the received video signal to the selector 14.

The selector 14 selects one of the video signal supplied from the tuner 11, the video signal supplied from the HDMI receiver 12, and the video signal supplied from the video distribution application 13, and outputs the selected video signal to the video display processing unit 15.

Note that, as described later, not only the video signal but also a vertical synchronization signal Vsync is supplied from the selector 14 to the video display processing unit 15.

The video display processing unit 15 performs processing such as frame rate conversion on the video signal, and controls the display unit 16 on the basis of the processing result.

The display unit 16 includes a liquid crystal display panel 21 and a backlight 22.

The liquid crystal display panel 21 drives a liquid crystal display element to modulate light emitted from the backlight 22, thereby performing display.

The backlight 22 is formed by using, for example, a small light emitting diode (LED) of about 100 µm to 200 µm, an LED of a known size, a cold cathode fluorescent lamp (CCFL), or the like, and emits surface-emitted light to the liquid crystal display panel 21. Further, as described above, the backlight 22 performs a so-called blinking operation in which the backlight 22 is repeatedly turned on and off.

Note that, although the configuration of the display device including the display unit is illustrated in the example of Fig. 3, the present technology can also be applied to a display control device that does not include the display unit as a component.

### Configuration of Video Display Processing Unit

Fig. 4 is a block diagram illustrating a configuration example of the video display processing unit in Fig. 3 together with the display unit.

The video display processing unit 15 in Fig. 4 includes a frame buffer 31, a motion vector detection unit 32, a backlight control unit 33, and a display control unit 34.

The video signal from the selector 14 is supplied to the frame buffer 31, the motion vector detection unit 32, and the display control unit 34. The vertical synchronization signal from the selector 14 is supplied to the backlight control unit 33 and the display control unit 34.

The frame buffer 31 holds a frame image of one frame included in the supplied video signal, thereby outputting a frame image of the previous frame in the image signal to the motion vector detection unit 32.

The motion vector detection unit 32 detects a motion vector, which indicates a change in an image, on the basis of the frame image included in the video signal and the frame image of the previous frame supplied from the frame buffer 31.

Specifically, the motion vector detection unit 32 detects horizontal and vertical motions of the display content in units of blocks, each of blocks including a plurality of pixels, for example, on the basis of information of the two frame images to be supplied, and obtains the motion vector.

Then, the motion vector detection unit 32 determines a suitable blinking operation mode from among a plurality of blinking operation modes in accordance with a series of the motion vectors obtained in units of blocks, and outputs information indicating the determined blinking operation mode to the backlight control unit 33. For example, the motion vector detection unit 32 outputs, to the backlight control unit 33, information indicating a blinking operation mode corresponding to an amount of motion at a timing when the amount of motion of the obtained motion vector exceeds a set threshold value.

The backlight control unit 33 controls ON and OFF operations of the backlight 22 on the basis of the supplied vertical synchronization signal Vsync and the information indicating the blinking operation mode. Specifically, the backlight control unit 33 generates a backlight control signal corresponding to the video signal on the basis of the supplied vertical synchronization signal Vsync and the information indicating the blinking operation mode, and outputs the generated backlight control signal to the backlight 22.

The backlight control signal is a control signal for controlling light-on (ON) or light-off (OFF) of the backlight 22.

The backlight control unit 33 includes a backlight reference signal generation unit 51, a frequency measurement unit 52, a brightness decrease amount calculation unit 53, and a backlight lighting amount calculation unit 54.

The backlight reference signal generation unit 51 generates a backlight reference signal that serves as a reference of an operation of the backlight 22, on the basis of the supplied vertical synchronization signal Vsync, and outputs the generated backlight reference signal to the frequency measurement unit 52.

The frequency measurement unit 52 determines the length of the current frame at the timing of receiving the backlight reference signal supplied from the backlight reference signal generation unit 51, and measures the frequency. The frequency measurement unit 52 outputs the measurement result of the frequency to the brightness decrease amount calculation unit 53.

The brightness decrease amount calculation unit 53 calculates the brightness decrease amount due to the length of the additional lighting control period, using the supplied measurement result of the frequency, and outputs the calculated brightness decrease amount to the backlight lighting amount calculation unit 54.

The backlight lighting amount calculation unit 54 calculates the lighting amount in the current frame or the lighting amount of the backlight in the next frame, on the basis of the information indicating the blinking operation mode supplied from the motion vector detection unit 32, in order to compensate for the brightness by the supplied brightness decrease amount.

The backlight lighting amount calculation unit 54 controls the backlight 22 on the basis of the calculated lighting amount of the backlight.

The display control unit 34 controls the display of the liquid crystal display panel 21 on the basis of the supplied video signal and vertical synchronization signal Vsync. Specifically, the display control unit 35 performs predetermined image processing such as gamma processing and overdrive processing on the video signal, and outputs a liquid crystal display control signal to the liquid crystal display panel 21.

### 3. Details of Blinking Operation Modes

Here, the longer the backlight OFF period is, the more effective the effect of the blinking operation becomes. However, the longer the backlight OFF period is, the lower the brightness becomes. Therefore, thereafter, brightness compensation is required to a significant extent. As the brightness compensation is required to a greater extent, it becomes more difficult to reproduce the brightness accurately, and therefore, flicker is perceived as an adverse effect of the brightness change. To prevent the flicker, it is desirable not to perform the brightness compensation as much as possible.

As described above, since there is a trade-off relationship between the effect obtained by the blinking operation and the flicker generated as the adverse effect, in the present technology, a plurality of blinking operation modes are prepared, and it is determined whether a scene of the video signal is a scene requiring the blinking operation or a scene requiring suppression of the flicker by comparing the scene with a threshold value or the like on the basis of the motion vector of the video signal. In this way, the blinking operation mode can be dynamically changed.

Note that, when the input frequency of the video signal is a low frequency at which the flicker is likely to be noticeable, or when the frequency (number of times) of the frequency change of the video signal is large, the blinking operation may be stopped.

Hereinafter, each of the blinking operation modes will be described in order.

### Blinking Operation Mode 1

Figs. 5 and 6 are diagrams illustrating an operation example of a blinking operation mode 1.

Fig. 5 illustrates an operation example of the blinking operation mode 1 when the input frequency changes from 240 Hz to 120 Hz. Further, in Fig. 6, an operation example of the blinking operation mode 1 when the input frequency changes from 120 Hz to 80 Hz, continuing from the operation in Fig. 5, is illustrated.

Figs. 5 and 6 illustrate the normal lighting control period T, the additional lighting control period L, and the current ratio in the light-on period of the backlight, when the input frequency changes from 240 Hz to 120 Hz in the frame m and from 120 Hz to 80 Hz in the frame n in the case where the blinking ratio is 50%. Therefore, in Figs. 5 and 6, the normal lighting control period T is equal to or less than the frame period obtained at the maximum frequency (240 Hz) of the video signal.

Further, since the blinking ratio is 50%, the blinking control is performed so that a half period of the normal lighting control period T becomes the backlight ON period and a half period of the normal lighting control period T becomes the backlight OFF period.

In Fig. 5, up to the frame m - 1, since the input frequency is 240 Hz, the additional lighting control period L does not occur. Further, when the input frequency is 240 Hz, the current ratio to the backlight is 100% in the backlight ON period of the normal lighting control period T, and the current ratio to the backlight is 0% in the backlight OFF period of the normal lighting control period T.

In the frame m, the blinking control is performed in the same manner as in the frame m - 1, but since the input frequency is changed to 120 Hz in the middle of the frame m, the additional lighting control period L in which the backlight is turned off is generated in addition to the normal lighting control period T. That is, in the additional lighting control period L, the current ratio to the backlight 22 becomes 0%.

Therefore, in the blinking operation mode 1, the brightness decrease amount corresponding to the additional lighting control period L is compensated for during the light-on period of the backlight in the next frame m + 1. That is, in the backlight ON period of the normal lighting control period T of the frame m + 1, the current ratio to the backlight 22 is set to 200%, thereby compensating for the brightness decrease amount in the additional lighting control period L in the frame m, which is caused by the change of the input frequency to 120 Hz.

Further, in the frame m + 1 also, since the input frequency is 120 Hz, the additional lighting control period L is generated in addition to the normal lighting control period T, as in the frame m. The brightness decrease amount in the additional lighting control period L of the frame m + 1 is compensated for by setting the current ratio to the backlight 22 to 200% during the backlight ON period of the normal lighting control period T in the frame m + 2.

The same applies to the subsequent frames until the input frequency changes in the frame n in Fig. 6.

In the frame n in Fig. 6, the blinking control is performed in the same manner as in the frame m + 1 in Fig. 5, but since the input frequency changes to 80 Hz in the middle of the frame n, in addition to the normal lighting control period T and the additional lighting control period L, the additional lighting control period L is further generated. That is, an additional lighting control period 2L is generated.

Therefore, in the blinking operation mode 1, the brightness decrease amount corresponding to the additional lighting control period 2L is compensated for during the light-on period of the backlight in the next frame n + 1. That is, in the backlight ON period of the normal lighting control period T of the frame n + 1, the current ratio to the backlight 22 is set to 300%, thereby compensating for the brightness decrease amount in the additional lighting control period 2L in the frame n, which is caused by the change of the input frequency to 80 Hz.

Further, in the frame n + 1 also, since the input frequency is 80 Hz, the additional lighting control period 2L is generated in addition to the normal lighting control period T, as in the frame n. The brightness decrease amount in the additional lighting control period 2L of the frame n + 1 is compensated for by setting the current ratio to the backlight 22 to 300% during the backlight ON period of the normal lighting control period T in the frame n + 2.

The same applies to the subsequent frames until the input frequency changes.

As described above, in the blinking operation mode 1, the operation of compensating for the brightness decreased due to the additional lighting control period is performed during the light-on period in the next frame. According to the blinking operation mode 1, the adverse effect of the flicker becomes large, but the blinking effect is also large. Therefore, it can be said that the blinking operation mode 1 is a mode suitable for a scene requiring blinking or a scene not requiring suppression of the flicker.

Fig. 7 is a diagram illustrating another operation example of the blinking operation mode 1 in Fig. 5.

Fig. 7 is different from Fig. 5 only in that the blinking ratio is 100%. That is, in Fig. 7, since the blinking ratio is 100%, the blinking control is performed so that the entire period of the normal lighting control period T becomes the backlight ON period.

In the frame m, the blinking control is performed in the same manner as in the frame m - 1, but since the input frequency changes to 120 Hz in the middle of the frame m, the additional lighting control period L is generated in addition to the normal lighting control period T.

In the case of Fig. 7 also, the brightness decrease amount corresponding to the additional lighting control period L is compensated for during the light-on period of the backlight in the next frame m + 1. That is, in the normal lighting control period T of the frame m + 1, the current ratio to the backlight 22 is set to 200%, thereby compensating for the brightness decrease amount in the additional lighting control period L in the frame m, which is caused by the change of the input frequency to 120 Hz.

### Blinking Operation Mode 2

Figs. 8 and 9 are diagrams illustrating an operation example of a blinking operation mode 2.

Fig. 8 illustrates an operation example of the blinking operation mode 2 when the input frequency changes from 240 Hz to 120 Hz. Further, in Fig. 9, an operation example of the blinking operation mode 2 when the input frequency changes from 120 Hz to 80 Hz, continuing from the operation in Fig. 8, is illustrated.

Figs. 8 and 9 illustrate the normal lighting control period T, the additional lighting control period L, and the current ratio in the light-on period of the backlight, when the input frequency changes from 240 Hz to 120 Hz in the frame m and from 120 Hz to 80 Hz in the frame n in the case where the blinking ratio is 50%. Therefore, in Figs. 8 and 9, the normal lighting control period T is equal to or less than the frame period obtained at the maximum frequency (240 Hz) among the frequencies that change described above.

Further, since the blinking ratio is 50%, the blinking control is performed so that a half of the normal lighting control period T becomes the backlight ON period and a half of the normal lighting control period T becomes the backlight OFF period.

In Fig. 8, up to the frame m - 1, since the input frequency is 240 Hz, the additional lighting control period L does not occur. Further, when the input frequency is 240 Hz, the current ratio to the backlight is 100% in the backlight ON period of the normal lighting control period T, and the current ratio to the backlight is 0% in the backlight OFF period of the normal lighting control period T.

In the frame m, the blinking control is performed in the same manner as in the frame m - 1, but since the input frequency changes to 120 Hz in the middle of the frame m, the additional lighting control period L is generated in addition to the normal lighting control period T.

Therefore, in the case of the blinking operation mode 2, the backlight 22 is not completely turned off in the additional lighting control period L, but is turned on so as to have a constant current ratio (for example, 25%), and the remaining brightness decrease amount in the additional lighting control period L is compensated for during the light-on period of the backlight in the next frame m + 1.

That is, in the blinking operation mode 2, the current ratio to the backlight is set to 25% in the additional lighting control period L, and the current ratio to the backlight is set to 150% in the backlight ON period of the normal lighting control period T in the next frame, thereby compensating for the brightness decrease amount in the additional lighting control period L in the frame m, which is caused by the change of the input frequency to 120 Hz.

Further, in the frame m + 1 also, since the input frequency is 120 Hz, the additional lighting control period L is generated in addition to the normal lighting control period T, as in the frame m. The brightness decrease amount in the additional lighting control period L of the frame m + 1 is compensated for by setting the current ratio to the backlight 22 to 25% in the additional lighting control period L of the frame m + 1 and setting the current ratio to the backlight 22 to 150% in the backlight ON period of the normal lighting control period T of the frame m + 2.

The same applies to the subsequent frames until the input frequency changes in the frame n in Fig. 9.

In the frame n in Fig. 9, the blinking control is performed in the same manner as in the frame m + 1 in Fig. 8, but since the input frequency changes to 80 Hz in the middle of the frame n, in addition to the normal lighting control period T and the additional lighting control period L, the additional lighting control period L is further generated. That is, the additional lighting control period 2L is generated.

Therefore, in the blinking operation mode 2, the brightness decrease amount corresponding to the additional lighting control period 2L is compensated for during the additional lighting control period 2L and during the light-on period of the backlight in the next frame n + 1. That is, the current ratio to the backlight 22 is set to 25% in the additional lighting control period 2L, and the current ratio to the backlight 22 is set to 200% in the backlight ON period of the normal lighting control period T of the next frame n + 1, thereby compensating for the brightness decrease amount in the additional lighting control period 2L in the frame n, which is caused by the change of the input frequency to 80 Hz.

Further, in the frame n + 1 also, since the input frequency is 80 Hz, the additional lighting control period 2L is generated in addition to the normal lighting control period T, as in the frame n. The brightness decrease amount in the additional lighting control period 2L of the frame n + 1 is compensated for by setting the current ratio to the backlight 22 to 25% without completely turning off the backlight 22 in the additional lighting control period 2L of the frame n + 1 and setting the current ratio to the backlight 22 to 200% in the backlight ON period of the normal lighting control period T of the frame n + 2.

The same applies to the subsequent frames until the input frequency changes.

As described above, in the blinking operation mode 2, the operation of compensating for the brightness decreased due to the additional lighting control period is performed during the additional lighting control period and during the light-on period in the next frame. According to the blinking operation mode 2, the blinking effect is weakened but the flicker is less likely to occur as compared with the blinking operation mode 1. That is, when the blinking operation mode 2 is used, the blinking effect is moderate, and the adverse effect of the flicker is also moderate.

### Blinking Operation Mode 3

Figs. 10 and 11 are diagrams illustrating operation examples of a blinking operation mode 3.

Fig. 10 illustrates an operation example of the blinking operation mode 3 when the input frequency changes from 240 Hz to 120 Hz. Further, in Fig. 11, an operation example of the blinking operation mode 3 when the input frequency changes from 120 Hz to 80 Hz, continuing from the operation in Fig. 10, is illustrated.

Figs. 10 and 11 illustrate the normal lighting control period T, the additional lighting control period L, and the current ratio in the light-on period of the backlight, when the input frequency changes from 240 Hz to 120 Hz in the frame m and from 120 Hz to 80 Hz in the frame n in the case where the blinking ratio is 50%. Therefore, in Figs. 10 and 11, the normal lighting control period T is equal to or less than the period obtained at the maximum frequency (240 Hz) among the frequencies that change described above.

Further, since the blinking ratio is 50%, the blinking control is performed so that a half of the normal lighting control period T becomes the backlight ON period of the normal lighting control period T and a half of the normal lighting control period T becomes the backlight OFF period of the normal lighting control period T.

In Fig. 10, up to the frame m - 1, since the input frequency is 240 Hz, the additional lighting control period L does not occur. Further, when the input frequency is 240 Hz, the current ratio to the backlight 22 is 100% in the backlight ON period of the normal lighting control period T, and the current ratio to the backlight 22 is 0% in the backlight OFF period of the normal lighting control period T.

In the frame m, the blinking control is performed in the same manner as in the frame m - 1, but since the input frequency changes to 120 Hz in the middle of the frame m, the additional lighting control period L is generated in addition to the normal lighting control period T.

Therefore, in the case of the blinking operation mode 3, the backlight is turned off in a predetermined time period L1 of the additional lighting control period L, and the backlight is turned on at the current ratio of 50% to the backlight 22 in a remaining time period L2, and the brightness decrease amount in the additional lighting control period L is compensated for during the light-on period of the backlight in the next frame m + 1.

That is, in the blinking operation mode 3, not only the backlight OFF period L1 but also the backlight ON period L2 is provided in the additional lighting control period L, the current ratio to the backlight 22 in the period L2 is set to 50%, and the current ratio to the backlight 22 in the backlight ON period of the normal lighting control period T in the next frame is set to 150%, thereby compensating for the brightness decrease amount in the additional lighting control period L in the frame m, which is caused by the change of the input frequency to 120 Hz.

Further, in the frame m + 1 also, since the input frequency is 120 Hz, the additional lighting control period L is generated in addition to the normal lighting control period T, as in the frame m. The brightness decrease amount in the additional lighting control period L of the frame m + 1 is compensated for by providing not only the backlight OFF period L1 but also the backlight ON period L2 in the additional lighting control period L of the frame m + 1, setting the current ratio to the backlight 22 in the period L2 to 50%, and setting the current ratio to the backlight 22 in the backlight ON period of the normal lighting control period T of the frame m + 2 to 150%.

The same applies to the subsequent frames until the input frequency changes in the frame n in Fig. 11.

In the frame n in Fig. 11, the blinking control is performed in the same as in the frame m + 1 in Fig. 10, but since the input frequency changes to 80 Hz in the middle of the frame n, in addition to the normal lighting control period T and the additional lighting control period L, the additional lighting control period L is further generated. That is, the additional lighting control period 2L is generated.

Therefore, in the blinking operation mode 2, the brightness decrease amount corresponding to the additional lighting control period 2L is compensated for during the additional lighting control period 2L and during the light-on period of the backlight in the next frame n + 1. That is, not only the backlight OFF period L1 but also the backlight ON period L2 are provided in the additional lighting control period 2L, the current ratio to the backlight 22 in the period L2 is set to 50%, and the current ratio to the backlight is set to 150% in the backlight ON period of the normal lighting control period T of the next frame n + 1, thereby compensating for the brightness decrease amount in the additional lighting control period 2L in the frame n, which is caused by the change of the input frequency to 80 Hz.

Further, in the frame n + 1 also, since the input frequency is 80 Hz, the additional lighting control period 2L is generated in addition to the normal lighting control period T, as in the frame n. The brightness decrease amount in the additional lighting control period 2L of the frame n + 1 is compensated for by providing not only the backlight OFF period L1 but also the backlight ON period L2 in the additional lighting control period 2L of the frame n + 1, setting the current ratio to the backlight 22 in the period L2 to 50%, and setting the current ratio to the backlight in the backlight ON period of the normal lighting control period T of the frame n + 2 to 150%.

The same applies to the subsequent frames until the input frequency changes.

As described above, in the blinking operation mode 3, the brightness compensation operation is performed to compensate for the brightness decrease amount in the additional lighting control period during the additional lighting control period and during the light-on period in the next frame. In the blinking operation mode 3, the blinking effect is weakened as compared with the blinking operation mode 1, but the flicker is less likely to occur. That is, when the blinking operation mode 3 is used, the blinking effect is moderate, and the adverse effect of the flicker is also moderate.

### Blinking Operation Mode 4

Figs. 12 and 13 are diagrams illustrating operation examples of a blinking operation mode 4.

Fig. 12 illustrates an operation example of the blinking operation mode 4 when the input frequency changes from 240 Hz to 120 Hz. Further, in Fig. 13, an operation example of the blinking operation mode 4 when the input frequency changes from 120 Hz to 80 Hz, continuing from the operation in Fig. 12, is illustrated.

Figs. 12 and 13 illustrate the normal lighting control period T, the additional lighting control period L, and the current ratio in the light-on period of the backlight, when the input frequency changes from 240 Hz to 120 Hz in the frame m and from 120 Hz to 80 Hz in the frame n in the case where the blinking ratio is 50%. Therefore, in Figs. 12 and 13, the normal lighting control period T is equal to or less than the period obtained at the maximum frequency (240 Hz) among the frequencies that change described above.

Further, since the blinking ratio is 50%, the blinking control is performed so that a half of the normal lighting control period T becomes the backlight ON period and a half of the normal lighting control period T becomes the backlight OFF period.

In Fig. 12, up to the frame m - 1, since the input frequency is 240 Hz, the additional lighting control period L does not occur. Further, when the input frequency is 240 Hz, the current ratio to the backlight 22 is 100% in the backlight ON period of the normal lighting control period T, and the current ratio to the backlight 22 is 0% in the backlight OFF period of the normal lighting control period T.

In the frame m, the blinking control is performed in the same manner as in the frame m - 1, but since the input frequency changes to 120 Hz in the middle of the frame m, the additional lighting control period L is generated in addition to the normal lighting control period T.

Therefore, in the case of the blinking operation mode 4, the backlight is not turned off but is turned on at the current ratio of 50% in the additional lighting control period L. As a result, the need to increase the current when the backlight is turned on in the next frame m + 1 is eliminated.

That is, in the blinking operation mode 3, the backlight 22 is turned on in the additional lighting control period L, thereby compensating for the brightness decrease amount in the additional lighting control period L in the frame m, which is caused by the change of the input frequency to 120 Hz.

Further, in the frame m + 1 also, since the input frequency is 120 Hz, the additional lighting control period L is generated in addition to the normal lighting control period T, as in the frame m. The brightness decrease amount in the additional lighting control period L of the frame m + 1 is compensated for by turning on the backlight 22 at the current ratio of 50% in the additional lighting control period L of the frame m + 1.

The same applies to the subsequent frames until the input frequency changes in the frame n in Fig. 13.

In the frame n in Fig. 13, the blinking control is performed in the same manner as in the frame m + 1 in Fig. 12, but since the input frequency is changed to 80 Hz in the middle of the frame n, in addition to the normal lighting control period T and the additional lighting control period L, the additional lighting control period L is further generated. That is, the additional lighting control period 2L is generated.

Therefore, in the blinking operation mode 4, the brightness decrease amount corresponding to the additional lighting control period 2L is compensated for during the additional lighting control period 2L. That is, during the additional lighting control period 2L, the brightness decrease amount in the additional lighting control period 2L in the frame n, which is caused by the change of the input frequency to 80 Hz, is compensated for by turning on the backlight at the current ratio of 50%.

Further, in the frame n + 1 also, since the input frequency is 80 Hz, the additional lighting control period 2L is generated in addition to the normal lighting control period T, as in the frame n. The brightness decrease amount in the additional lighting control period 2L of the frame n + 1 is compensated for by turning on the backlight at the current ratio of 50% in the additional lighting control period 2L of the frame n + 1.

The same applies to the subsequent frames until the input frequency changes.

As described above, in the blinking operation mode 4, the operation of compensating for the brightness decreased due to the additional lighting control period is performed during the additional lighting control period. In the blinking operation mode 4, the blinking effect is weakened compared with the blinking operation modes 2 and 3, but the flicker is less likely to occur. That is, when the blinking operation mode 4 is used, the blinking effect is small, but the adverse effect of the flicker is also small.

Further, when the blinking operation mode 4 is used, the current rise for the brightness compensation does not occur.

Fig. 14 is a diagram illustrating another operation example of the blinking operation mode 4 in Fig. 12.

Fig. 14 is different from Fig. 12 only in that a method of turning on the backlight 22 in the generated additional lighting control period L is changed from DC lighting to high-frequency PWM dimming and the current ratio at that time is changed from 50% to 100%.

By adopting such a configuration, video blur can be reduced while suppressing the flicker.

### 4. Operation

### Video Display Processing

Fig. 15 is a flowchart for describing backlight control processing of the video display processing unit 15.

The video signal from the selector 14 is supplied to the frame buffer 31, the motion vector detection unit 32, and the display control unit 34. The vertical synchronization signal from the selector 14 is supplied to the backlight control unit 33 and the display control unit 34.

In step S11, the frame buffer 31, the motion vector detection unit 32, and the display control unit 34 receive the video signal supplied from the selector 14 as an input.

In step S12, the motion vector detection unit 32 receives the frame image of the previous frame from the frame buffer 31 as an input.

In step S13, the motion vector detection unit 32 detects the motion vector, which indicates a change in an image, on the basis of the frame image included in the input video signal and the frame image of the previous frame supplied from the frame buffer 31.

In step S14, the motion vector detection unit 32 determines a suitable blinking operation mode from among the plurality of blinking operation modes in accordance with a series of the motion vectors obtained in units of blocks, and outputs the information indicating the determined blinking operation mode to the backlight control unit 33.

In step S15, the backlight reference signal generation unit 51 generates the backlight reference signal that serves as the reference of the backlight, on the basis of the supplied vertical synchronization signal, and outputs the generated backlight reference signal to the frequency measurement unit 52.

In step S16, the frequency measurement unit 52 determines the length of the current frame at the timing of receiving the backlight reference signal supplied from the backlight reference signal generation unit 51, and measures the frequency. The frequency measurement unit 52 outputs the measurement result of the frequency to the brightness decrease amount calculation unit 53.

In step S17, the brightness decrease amount calculation unit 53 calculates the brightness decrease amount due to the length of the additional lighting control period using the supplied measurement result of the frequency, and outputs the calculated brightness decrease amount to the backlight lighting amount calculation unit 54.

In step S18, the backlight lighting amount calculation unit 54 calculates the lighting amount in the current frame and the lighting amount of the backlight in the next frame on the basis of the information indicating the blinking operation mode supplied from the motion vector detection unit 32, in order to compensate for the brightness corresponding to the supplied brightness decrease amount. The backlight lighting amount calculation unit 54 controls the backlight 22 on the basis of the calculated lighting amount of the backlight.

For example, when the motion vector is greater than a first threshold value, the motion vector detection unit 32 determines to use the blinking operation mode 1, which is a mode suitable for a scene requiring blinking or a scene not requiring suppression of the flicker. In this case, on the basis of the blinking operation mode 1, the backlight lighting amount calculation unit 54 compensates for the brightness decrease amount by adding the current corresponding to the brightness decrease amount during the light-on period of the backlight in the next frame, as described above with reference to Figs. 5 and 6.

For example, when the motion vector is equal to or less than the first threshold value and greater than a second threshold value that is smaller than the first threshold value, the motion vector detection unit 32 determines to use the blinking operation mode 2 or the blinking operation mode 3 in which the blinking effect is weakened but the flicker is less likely to occur compared with the blinking operation mode 1.

When the blinking operation mode 2 is determined to be used, on the basis of the blinking operation mode 2, the backlight lighting amount calculation unit 54 turns on the backlight at the predetermined current ratio in the additional lighting control period, and adds the current corresponding to the brightness decrease amount during the light-on period of the backlight in the next frame, as described above with reference to Figs. 8 and 9, thereby compensating for the brightness decrease amount.

Further, when the blinking operation mode 3 is determined to be used, on the basis of the blinking operation mode 3, the backlight lighting amount calculation unit 54 turns on the backlight after a certain time period elapses in the additional lighting control period, and adds the current corresponding to the brightness decrease amount during the light-on period of the backlight in the next frame, as described above with reference to Figs. 10 and 11, thereby compensating for the brightness decrease amount.

Further, when the motion vector is equal to or less than the second threshold value that is smaller than the first threshold value, the motion vector detection unit 32 determines to use the blinking operation mode 4 in which the flicker is less likely to occur, because the blinking effect may be weakened in this case. In this case, on the basis of the blinking operation mode 4, the backlight lighting amount calculation unit 54 turns on the backlight during the additional lighting control period, as described above with reference to Figs. 12 and 13, thereby compensating for the brightness decrease amount.

Note that, during this light-on period, as described above with reference to Fig. 14, the method of turning on the backlight 22 may be changed from the DC lighting to the high-frequency PWM dimming.

In step S19, the motion vector detection unit 32 determines whether all the frames have been completed. When it is determined in step S19 that all the frames have not yet been completed, the processing returns to step S11, and the subsequent steps are repeated.

In step S19, when it is determined that all the frames have been completed, the backlight control processing ends.

Note that, in the above description, an example has been described in which the normal lighting control period T is the frame period obtained at the maximum frequency of the video signal, but in the present technology, the normal lighting control period T may be equal to or less than the frame period obtained at the maximum frequency of the video signal.

### 5. Others

### Effects of Present Technology

As described above, in the present technology, in the blinking control, the normal lighting control period of the backlight is set to be equal to or less than the frame period obtained at the maximum frequency of the video signal, and the brightness decrease amount in the additional lighting control period of the backlight, which is caused by the frequency change of the video signal, is compensated for during at least one of the additional lighting control period and the normal lighting period of the next frame.

As a result, even when the input frequency changes, the blinking operation can be performed and the video blur can be improved.

Further, according to the present technology, the motion vector of the video signal is detected, and the brightness decrease amount is compensated for in accordance with the magnitude of the motion vector.

As a result, it is possible to make the flicker, which is generated as a side effect, less noticeable.

### Configuration Example of Computer

The above-described series of processing steps can be executed by hardware or software. In a case where the series of processing steps is executed by software, a program constituting the software is installed from a program recording medium to a computer embedded in dedicated hardware, a general-purpose personal computer, or the like.

Fig. 16 is a block diagram illustrating a configuration example of hardware of a computer that executes the above-described series of processing steps by a program.

A CPU 301, a ROM 302, and a RAM 303 are connected to each other by a bus 304.

An input/output interface 305 is also connected to the bus 304. An input unit 306 including a keyboard, a mouse, and the like, and an output unit 307 including a display, a speaker, and the like are connected to the input/output interface 305. Further, a storage unit 308 including a hard disk, a nonvolatile memory, or the like, a communication unit 309 including a network interface or the like, and a drive 310 that drives a removable medium 311 are connected to the input/output interface 305.

In the computer configured as described above, for example, the CPU 301 loads a program stored in the storage unit 308 into the RAM 303 via the input/output interface 305 and the bus 304, and executes the program, thereby executing the series of processing steps described above.

The program executed by the CPU 301 is, for example, recorded on the removable medium 311, or provided via a wired or wireless transmission medium such as a local area network, the Internet, and digital broadcast, and installed in the storage unit 308.

Note that the program executed by the computer may be a program in which processing is performed in time series in the order described in the present specification, or may be a program in which processing is performed in parallel or at a necessary timing such as when a call is performed.

Note that in the present specification, the system means a set of a plurality of components (devices, modules (parts), and the like), and it does not matter whether all the components are in the same housing. Therefore, the system refers to both a plurality of devices housed in separate housings and connected via a network, and one device in which a plurality of modules are housed in one housing.

Further, the effects described in this specification are merely illustrative and not limiting, and other effects may also be provided.

The embodiments of the present technology are not limited to the above-described embodiments, and various modifications can be made without departing from the gist of the present technology.

For example, the present technology can have a configuration of cloud computing in which one function is shared and processed in cooperation by a plurality of apparatuses via a network.

Further, each step described in the above-described flowchart can be performed by one device or can be shared and executed by a plurality of devices.

Further, when a single step includes multiple processes, the multiple processes included in that single step can be executed by a single device, or can be shared and executed by a plurality of devices.

### Combination Example of Configurations

Note that the present technology may also have the following configurations.
(1) A display control device includes a backlight control unit configured to, in blinking control, set a normal lighting control period of a backlight to be equal to or less than a frame period obtained at a maximum frequency of a video signal and compensate for a brightness decrease amount in an additional lighting control period of the backlight, which is caused by a frequency change of the video signal, during at least one of the additional lighting control period or the normal lighting period of a next frame.
(2) In the display control device according to (1) described above, the backlight control unit compensates for the brightness decrease amount by adding a current corresponding to the brightness decrease amount, during a light-on period of the backlight in the normal lighting control period in the next frame.
(3) In the display control device according to (1) described above, the backlight control unit compensates for the brightness decrease amount by turning on the backlight at a predetermined current ratio during the additional lighting control period and adding a current corresponding to the brightness decrease amount during a light-on period of the backlight in the next frame.
(4) In the display control device according to (1) described above, the backlight control unit compensates for the brightness decrease amount by turning on the backlight after a certain time period elapses in the additional lighting control period and adding a current corresponding to the brightness decrease amount during a light-on period of the backlight in the next frame.
(5) In the display control device according to (1) described above, the backlight control unit compensates for the brightness decrease amount by turning on the backlight during the additional lighting control period.
(6) In the display control device according to (5) described above, the backlight control unit compensates for the brightness decrease amount by making a change from DC lighting to PWM dimming and turning on the backlight during the additional lighting control period.
(7) The display control device according to (1) described above further includes a motion vector detection unit configured to detect a motion vector of the video signal, wherein the backlight control unit compensates for the brightness decrease amount in accordance with a magnitude of the motion vector.
(8) In the display control device according to (7) described above, when the motion vector is greater than a first threshold value, the backlight control unit compensates for the brightness decrease amount by adding a current corresponding to the brightness decrease amount during a light-on period of the backlight in the next frame.
(9) In the display control device according to (7) described above, when the motion vector is equal to or less than a first threshold value and is greater than a second threshold value smaller than the first threshold value, the backlight control unit compensates for the brightness decrease amount by turning on the backlight at a predetermined current ratio during the additional lighting control period and adding a current corresponding to the brightness decrease amount during a light-on period of the backlight in the next frame.
(10) In the display control device according to (7) described above, when the motion vector is equal to or less than a first threshold value and is greater than a second threshold value smaller than the first threshold value, the backlight control unit compensates for the brightness decrease amount by turning on the backlight after a certain time period elapses in the additional lighting control period and adding a current corresponding to the brightness decrease amount during a light-on period of the backlight in the next frame.
(11) In the display control device according to (7) described above, when the motion vector is equal to or less than a second threshold value smaller than a first threshold value, the backlight control unit compensates for the brightness decrease amount by turning on the backlight during the additional lighting control period.
(12) In the display control device according to (11) described above, the backlight control unit compensates for the brightness decrease amount by making a change from DC lighting to PWM dimming and turning on the backlight during the additional lighting control period.
(13) In the display control device according to any one of (1) to (12) described above, the backlight control unit stops the blinking control when a frequency of the frequency change is higher than a predetermined threshold value.
(14) In the display control device according to any one of (1) to (13) described above, the backlight control unit stops the blinking control when a frequency after the frequency change is lower than a predetermined threshold value.
(15) The display control device according to any one of (1) to (14) described above further includes a display unit including the backlight driven by the backlight control unit.
(16) A display control method includes, in blinking control, setting, using a display control device, a normal lighting control period of a backlight to be equal to or less than a frame period obtained at a maximum frequency of a video signal and compensating, using the display control device, for a brightness decrease amount in an additional lighting control period of the backlight, which is caused by a frequency change of the video signal, during at least one of the additional lighting control period or the normal lighting period of a next frame.
(17) A program causes a computer to function as a backlight control unit configured to, in blinking control, set a normal lighting control period of a backlight to be equal to or less than a frame period obtained at a maximum frequency of a video signal and compensate for a brightness decrease amount in an additional lighting control period of the backlight, which is caused by a frequency change of the video signal, during at least one of the additional lighting control period or the normal lighting period of a next frame.

### Reference Signs List

1 Display device, 11 Tuner, 12 HDMI receiver, 13 Video distribution application, 14 Selector, 15 Video display processing unit, 16 Display unit, 21 Liquid crystal display panel, 22 Backlight, 31 Frame buffer, 32 Motion vector detection unit, 33 Backlight control unit, 34 Display control unit, 51 Backlight reference signal generation unit, 52 Frequency measurement unit, 53 Brightness decrease amount calculation unit, 54 Backlight lighting amount calculation unit

## Claims

1. A display control device comprising:
a backlight control unit configured to, in blinking control,
set a normal lighting control period of a backlight to be equal to or less than a frame period obtained at a maximum frequency of a video signal and compensate for a brightness decrease amount in an additional lighting control period of the backlight, which is caused by a frequency change of the video signal, during at least one of the additional lighting control period or the normal lighting period of a next frame.

2. The display control device according to claim 1, wherein
the backlight control unit compensates for the brightness decrease amount by adding a current corresponding to the brightness decrease amount, during a light-on period of the backlight in the normal lighting control period in the next frame.

3. The display control device according to claim 1, wherein
the backlight control unit compensates for the brightness decrease amount by turning on the backlight at a predetermined current ratio during the additional lighting control period and adding a current corresponding to the brightness decrease amount during a light-on period of the backlight in the next frame.

4. The display control device according to claim 1, wherein
the backlight control unit compensates for the brightness decrease amount by turning on the backlight after a certain time period elapses in the additional lighting control period and adding a current corresponding to the brightness decrease amount during a light-on period of the backlight in the next frame.

5. The display control device according to claim 1, wherein
the backlight control unit compensates for the brightness decrease amount by turning on the backlight during the additional lighting control period.

6. The display control device according to claim 5, wherein
the backlight control unit compensates for the brightness decrease amount by making a change from DC lighting to PWM dimming and turning on the backlight during the additional lighting control period.

7. The display control device according to claim 1, further comprising:
a motion vector detection unit configured to detect a motion vector of the video signal, wherein
the backlight control unit compensates for the brightness decrease amount in accordance with a magnitude of the motion vector.

8. The display control device according to claim 7, wherein
when the motion vector is greater than a first threshold value, the backlight control unit compensates for the brightness decrease amount by adding a current corresponding to the brightness decrease amount during a light-on period of the backlight in the next frame.

9. The display control device according to claim 7, wherein
when the motion vector is equal to or less than a first threshold value and is greater than a second threshold value smaller than the first threshold value, the backlight control unit compensates for the brightness decrease amount by turning on the backlight at a predetermined current ratio during the additional lighting control period and adding a current corresponding to the brightness decrease amount during a light-on period of the backlight in the next frame.

10. The display control device according to claim 7, wherein
when the motion vector is equal to or less than a first threshold value and is greater than a second threshold value smaller than the first threshold value, the backlight control unit compensates for the brightness decrease amount by turning on the backlight after a certain time period elapses in the additional lighting control period and adding a current corresponding to the brightness decrease amount during a light-on period of the backlight in the next frame.

11. The display control device according to claim 7, wherein
when the motion vector is equal to or less than a second threshold value smaller than a first threshold value, the backlight control unit compensates for the brightness decrease amount by turning on the backlight during the additional lighting control period.

12. The display control device according to claim 11, wherein
the backlight control unit compensates for the brightness decrease amount by making a change from DC lighting to PWM dimming and turning on the backlight during the additional lighting control period.

13. The display control device according to claim 1, wherein
the backlight control unit stops the blinking control when a frequency of the frequency change is higher than a predetermined threshold value.

14. The display control device according to claim 1, wherein
the backlight control unit stops the blinking control when a frequency after the frequency change is lower than a predetermined threshold value.

15. The display control device according to claim 1, further comprising:
a display unit including the backlight driven by the backlight control unit.

16. A display control method comprising:
in blinking control,
setting, using a display control device, a normal lighting control period of a backlight to be equal to or less than a frame period obtained at a maximum frequency of a video signal; and
compensating, using the display control device, for a brightness decrease amount in an additional lighting control period of the backlight, which is caused by a frequency change of the video signal, during at least one of the additional lighting control period or the normal lighting period of a next frame.

17. A program for causing a computer to function as a backlight control unit configured to, in blinking control, set a normal lighting control period of a backlight to be equal to or less than a frame period obtained at a maximum frequency of a video signal and compensate for a brightness decrease amount in an additional lighting control period of the backlight, which is caused by a frequency change of the video signal, during at least one of the additional lighting control period or the normal lighting period of a next frame.
